(19) Europäisches Patentamt / European Patent Office / Office européen des brevets

(11) **EP 4 678 421 A1**

(12) # EUROPEAN PATENT APPLICATION

(43) Date of publication:
**14.01.2026 Bulletin 2026/03**

(21) Application number: **25182762.2**

(22) Date of filing: **13.06.2025**

(51) International Patent Classification (IPC):
**B60C 15/024** (2006.01)   **B60C 11/00** (2006.01)

(52) Cooperative Patent Classification (CPC):
**B60C 15/0242; B60C 11/0008; B60C 11/005**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH LA MA MD TN**

(30) Priority: **08.07.2024 JP 2024109833**

(71) Applicant: **SUMITOMO RUBBER INDUSTRIES, LTD.**
**Kobe-shi, Hyogo 651-0072 (JP)**

(72) Inventor: **OMORI, CHISATO**
**Hyogo, 651-0072 (JP)**

(74) Representative: **Forresters IP LLP**
**Skygarden**
**Erika-Mann-Straße 11**
**80636 München (DE)**

(54) **PNEUMATIC TIRE**

(57)   A pneumatic tire 1 includes a cap rubber (2C) having a rubber hardness (B). In the meridional cross-section of the tire in the standard state, a rim protector (10) having a top portion (11) protruding outward of the tire is formed on an outer surface (4A) of the first bead portion (4). The rim protector 10 includes an inner arcuate surface (12) having a radius of curvature C (mm), which extends from the top portion (11) toward the inner side in the tire radial direction and has a center (12c) located outward of the tire. When (H) is defined as the separation distance in the tire axial direction between the top portion (11) and the radial line (RL) that defines the rim width of the standard rim (R), the following expression (1) is satisfied:

$$12.8 \leq H \times B / C \leq 93.5 \ldots (1).$$

**FIG.2**

EP 4 678 421 A1

**Description**

[Technical Field]

The present invention relates to a pneumatic tire.

[Background Art]

Patent Document 1 discloses a pneumatic tire with a bead portion having a protruding portion projecting outward in the tire axial direction. The protruding portion is provided at a position where at least a part thereof comes into contact with an arcuate surface at an outer end of a rim flange of a standard rim, in a loaded state in which the tire is mounted on the standard rim, inflated to a standard internal pressure, and subjected to a standard load.

[Prior Art Documents]

[Patent Documents]

[Patent Document 1] Japanese Unexamined Patent Application Publication 2005-186672

[Summary of the Invention]

[Problem to be Solved by the Invention]

In recent years, there has been a growing demand for improving ride comfort performance of tires. Ride comfort performance is evaluated as favorable when vibrations caused by passing over a protrusion (e.g., a single bump) provided on the road surface are reduced. As a method for improving such ride comfort performance of tires, it is known, for example, to reduce the rigidity of the tread portions. Unfortunately, simply reducing the rigidity of the tread portions tends to increase frictional resistance during running, hereby deteriorating rolling resistance performance.

The present invention has been devised in view of the above circumstances, and its main object is to provide a pneumatic tire capable of improving ride comfort performance while suppressing deterioration in rolling resistance performance.

[Means for Solving the Problem]

The present invention relates to a pneumatic tire which includes a tread portion, a first bead portion in which a bead core is embedded, and a cap rubber that forms a ground contact surface of the tread portion and has a rubber hardness B (degrees), wherein in a tire meridional cross section in a standard state in which the pneumatic tire is mounted on a standard rim, adjusted to a standard internal pressure, and under no load, a rim protector that has a top portion protruding outward of the tire and extends in a tire circumferential direction is formed on an outer surface of the first bead portion, the rim protector includes an inner arcuate surface extending inward in a tire radial direction from the top portion and having a radius of curvature C (mm) with a center located outward of the tire, and when a separation distance in a tire axial direction between the top portion and a tire radial line that defines the rim width of the standard rim is defined as H (mm), the following expression (1) is satisfied:

$$12.8 \leq H \times B / C \leq 93.5 \ldots (1).$$

[Effects of the Invention]

The pneumatic tire according to the present invention, by adopting the above-described configuration, can improve ride comfort performance while suppressing deterioration in rolling resistance performance.

[Brief Description of the Drawings]

FIG. 1 is a meridional cross-sectional view of a pneumatic tire showing an embodiment of the present invention;
FIG. 2 is an enlarged view of the first sidewall portion and the first bead portion of FIG. 1;

FIG. 3A is a perspective cross-sectional view of the pneumatic tire according to the present embodiment;
FIG. 3B is a perspective cross-sectional view of a pneumatic tire according to another embodiment; and
FIG. 4 is a meridional cross-sectional view of the first sidewall portion and the first bead portion of a pneumatic tire according to another embodiment.

[Mode for Carrying Out the Invention]

Hereinafter, one or more embodiments of the present invention will be described with reference to the drawings. The drawings may include exaggerated representations and representations differing from actual dimensional ratios of the structure to facilitate understanding of the present invention. When multiple embodiments are provided, the same or common elements throughout the specification are denoted by the same reference numerals, and redundant descriptions are omitted.

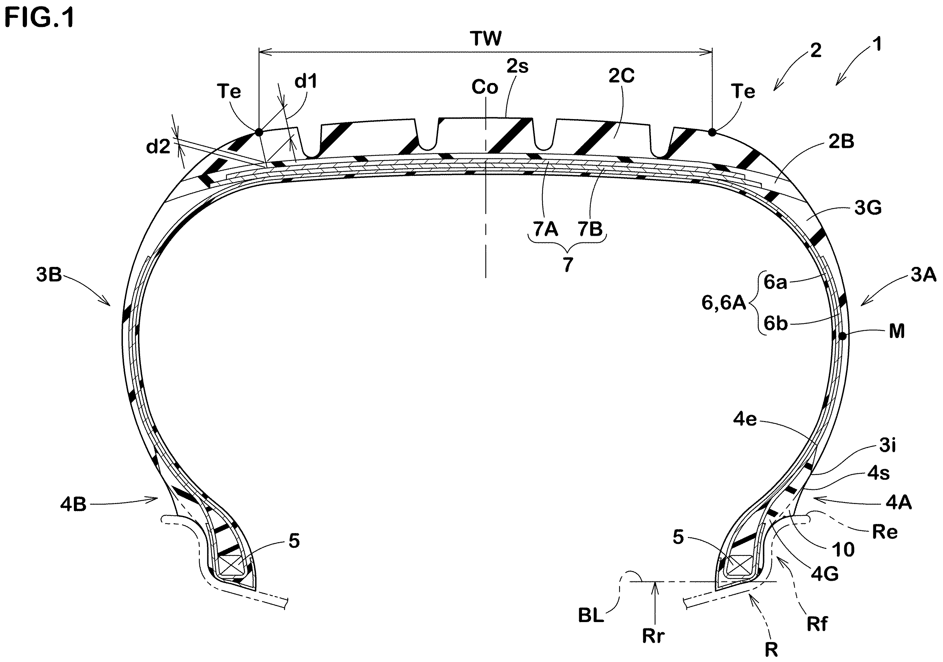

FIG. 1 is a meridian cross-sectional view of a pneumatic tire 1 (hereinafter sometimes simply referred to as "the tire 1") according to an embodiment of the present invention. The cross section is taken along a tire meridian plane including the rotational axis of the tire (not shown). The tire 1 of the present embodiment is suitably used, for example, as a tire for passenger cars. Alternatively, the present invention may also be applied, for example, to heavy-duty tires. FIG. 1 shows the tire 1 in its standard state.

As used herein, the "standard state" refers to a state in which, for a pneumatic tire specified by various standards, the tire is mounted on a standard rim (hereinafter sometimes referred to simply as "rim R") and adjusted to the standard internal pressure under no load. In the case of a tire not specified by various standards, the standard state refers to a standard usage condition according to the intended use of the tire, in which the tire is not mounted on a vehicle and is under no load. As used herein, unless otherwise specified, the dimensions and the like of each part of the tire are values measured in the above-mentioned standard state. In addition, for structures that cannot be measured in the standard state (for example, internal components of the tire 1), the values are measured in a state approximating the standard state as closely as possible.

The "standard rim R" refers to the rim that is specified for each tire in the system of standards on which the tire is based. For example, the standard rim referred to as the "standard rim" in the JATMA standards, the "Design Rim" in the TRA standards, and the "Measuring Rim" in the ETRTO standards. The rim R includes a rim flange Rf. In this specification, the rim flange Rf refers to the portion of the rim R located outward in the tire radial direction from the bead baseline BL. The bead baseline BL is a virtual straight line extending in parallel with the tire axial direction and defines the rim diameter Rr (see JATMA and other standards) of the rim R.

The "standard internal pressure" refers to the air pressure specified for each tire in the system of standards on which the tire is based. For example, the standard internal pressure corresponds to the "maximum air pressure" in the JATMA standards, the maximum value listed in the table "TIRE LOAD LIMITS AT VARIOUS COLD INFLATION PRESSURES" in the TRA standards, and the "INFLATION PRESSURE" in the ETRTO standards.

The tire 1 includes a tread portion 2 and a first bead portion 4A in which a bead core 5 is embedded. The tire 1 further includes a cap rubber 2C that forms a ground contact surface 2s of the tread portion 2 and has a rubber hardness "B" (degrees). Furthermore, the tire 1 includes a first sidewall portion 3A that connects the tread portion 2 and the first bead portion 4A.

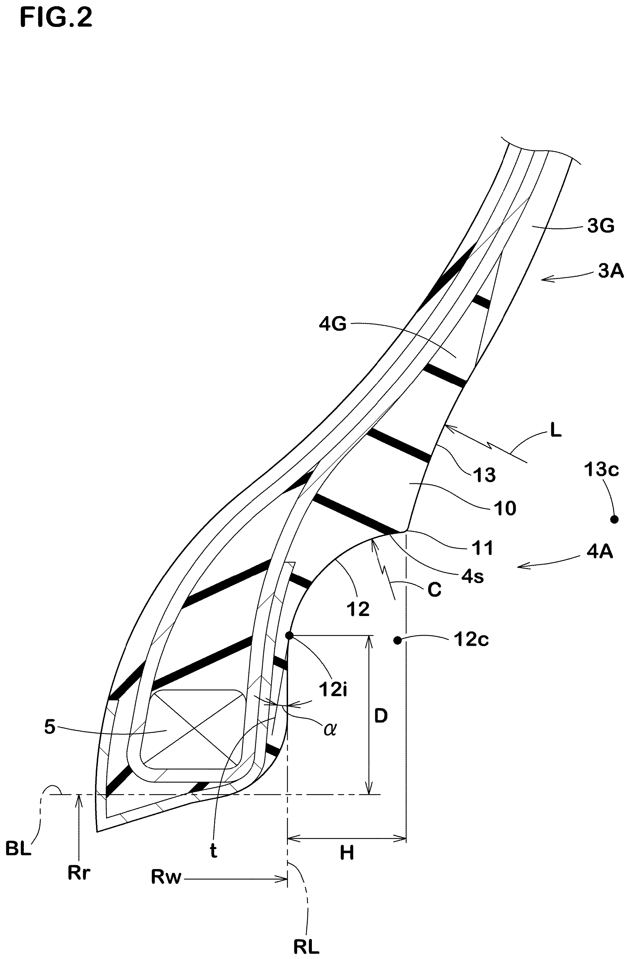

In the tire meridional cross-section in the standard state, a rim protector 10 extending in the tire circumferential direction is formed on the outer surface 4s of the first bead portion 4A. The rim protector 10 has a top portion 11 (shown in FIG. 2) that protrudes outward from the tire.

FIG. 2 is an enlarged view of the first sidewall portion 3A and the first bead portion 4A of the tire 1 shown in FIG. 1. For convenience, the rim R is omitted in FIG. 2. As shown in FIG. 2, the rim protector 10 includes an inner arcuate surface 12. The inner arcuate surface 12 extends inward in the tire radial direction from the top portion 11 and is an arc having a center 12c located outward of the tire. The inner arcuate surface 12 is formed with a radius of curvature "C" (mm). Such a rim protector 10 comes into contact with the rim flange Rf (shown in FIG. 1) of the standard rim R during running. As a result, deformation of the first bead portion 4A originating from the rim flange Rf can be suppressed. Accordingly, in the first bead portion 4A during running, heat generation (energy loss) due to rubber deformation can be reduced, and consequently, rolling resistance can be reduced. The radius of curvature C is specified as the average of the maximum and minimum values of the radii of curvature of the respective arcs when the inner arcuate surface 12 is formed from multiple arcs. The top portion 11 is the outer end of the inner arcuate surface 12 in the tire axial direction.

The separation distance H of the rim protector 10 serves as an index for ensuring a contact area F (not shown) between the rim flange Rf and the rim protector 10, and its value has a significant impact on the contact area F. The radius of curvature C of the inner arcuate surface 12 also serves as an index for ensuring the contact area F, and its value has a significant impact on the contact area F. From this, it can be said that the rolling resistance performance can be evaluated using the ratio (H / C) of the separation distance H to the radius of curvature C. Furthermore, the rubber hardness B of the cap rubber 2C serves as an index for damping vibrations during running, and its value has a significant impact on the vibration damping effect. The cap rubber 2C is, for example, the portion that first comes into contact with a protrusion (single bump) formed on a road surface, and the vibration caused by the single bump is transmitted to the vehicle via the cap rubber 2C, the first sidewall portion 3A, the first bead portion 4A, and the rim R. Therefore, the rigidity of the cap rubber 2C can be said to have a significant impact on the vibration damping effect. From the above, it can be said that the value (H × B / C), which applies the rubber hardness B to the ratio (H / C), can be used to evaluate both rolling resistance performance and ride comfort performance. The inventor, based on various experimental results, has found the upper and lower limits of the value (H × B / C), and in the present invention, it is defined as $12.8 \leq H \times B / C \leq 93.5$. This makes it possible to improve ride comfort performance while suppressing deterioration in rolling resistance performance. Here, the separation distance H is the length in the tire axial direction between the top portion 11 and a tire radial direction line RL, which defines the rim width Rw (as defined in JATMA), of the rim R. The tire radial direction line RL is a virtual straight line extending parallel to the tire radial direction.

In order to further suppress deterioration in rolling resistance performance, it is desirable to satisfy Equation (2):

$$25.0 \leq H \times B / C \leq 93.5 \ldots (2).$$

In particular, in order to improve ride comfort performance, it is desirable to satisfy Equation (3):

$$25.0 \leq H \times B / C \leq 61.0 \ldots (3).$$

By setting the lower limit to 25.0, deterioration in rolling resistance performance can be further suppressed. By setting the upper limit to 61.0, ride comfort performance can be further improved.

It is desirable that the separation distance H be 4.0 to 12.0 mm. Since the separation distance H is 4.0 mm or greater, the contact area F between the rim flange Rf and the rim protector 10 can be ensured in the standard state, and deformation of the first bead portion 4A can be suppressed. Moreover, with the contact area F between the rim flange Rf and the rim protector 10 ensured in the standard state, the contact pressure is reduced as compared to arrangements that omit such a rim protector. In order to increase the contact area F, it is further desirable that the separation distance H be 6.0 mm or greater, more desirably 8.0 mm or greater, and even more desirably 9.0 mm or greater. With a contact area of 9.0 mm or greater, the reduction in contact pressure is particularly enhanced. As the separation distance H is 12.0 mm or less, this suppresses excessive increase in the mass of the rim protector 10 and reduces its heat generation. In order to keep the mass of the rim protector 10 small, it is further desirable that the separation distance H be 11.5 mm or less, more desirably 11.0 mm or less, and even more desirably 10.5 mm or less. As an example, the separation distance H is desirably in the range from 6.0 to 11.5 mm, more desirably 8.0 to 11.0 mm, and even more desirably 9.0 to 10.5 mm.

It is desirable that the rubber hardness B be in the range from 48 to 74 degrees. As the rubber hardness B is 74 degrees or less, the cap rubber 2C (shown in FIG. 1) can exhibit a high vibration damping effect during running, particularly for vibrations generated when overcoming a single bump. In order to improve ride comfort performance, it is further desirable that the rubber hardness B be 72 degrees or less, more desirably 70 degrees or less, and even more desirably 68 degrees or less. Since the rubber hardness B is 48 degrees or more, excessive deformation of the tread portion 2 can be suppressed, and the basic rolling resistance performance can be maintained. In order to maintain low rolling resistance, it is further desirable that the rubber hardness B be 50 degrees or more, more desirably 52 degrees or more, and even more desirably 54 degrees or more. As an example, the rubber hardness B is desirably in the range from 50 to 72 degrees, more desirably 52 to 70 degrees, and even more desirably 54 to 68 degrees.

The "rubber hardness" refers to the Shore hardness (Hs) measured in accordance with JIS K 6253-3:2012 using a durometer of Type A under conditions at a temperature of 23 degrees C. The sample for Shore hardness measurement is prepared by cutting it from the tread portion 2 such that the tire radial direction corresponds to the thickness direction. In addition, the measurement is performed by pressing the measuring instrument against the sample from the ground contact surface side.

It is desirable that the radius of curvature C be in the range from 9.5 to 15.0 mm. Since the radius of curvature C is 15.0 mm or less, the contact area F between the rim flange Rf and the rim protector 10 can be ensured in the standard state, and deformation of the first bead portion 4A can be suppressed. In order to increase the contact area F, it is further desirable that the radius of curvature C be 13.5 mm or less, more desirably 12.0 mm or less, and even more desirably 10.5 mm or less. In a preferred embodiment, the radius of curvature C is 9.5 mm.

As shown in FIG. 1, the tire 1 includes a second sidewall portion 3B and a second bead portion 4B in which a bead core 5 is embedded. The second bead portion 4B is continuous with the second sidewall portion 3B on the inner side in the tire radial direction. The second sidewall portion 3B and the second bead portion 4B of the present embodiment have the same shapes as the first sidewall portion 3A and the first bead portion 4A, respectively, and thus, their descriptions are omitted. Alternatively, the second sidewall portion 3B and the second bead portion 4B may have shapes different from those of the first sidewall portion 3A and the first bead portion 4A, for example.

The tire 1 of the present embodiment includes a carcass 6 extending in a toroidal shape. In addition, the tire 1 includes, in the tread portion 2, for example, a belt layer 7 disposed on the outer side of the carcass 6 in the tire radial direction, and a base rubber 2B disposed between the belt layer 7 and a cap rubber 2C. The tire 1 further includes a sidewall rubber 3G that forms the first sidewall portion 3A and a clinch rubber 4G that forms the first bead portion 4A.

The carcass 6 is constituted by, for example, a single carcass ply 6A. The carcass ply 6A includes, for example, a main body portion 6a and a pair of turned-up portions 6b. The main body portion 6a extends, for example, between the first bead portion 4A and the second bead portion 4B. Each turned-up portion 6b is, for example, continuous with the main body portion 6a and is turned up around the bead core 5 from the inner side to the outer side in the tire axial direction. In the present embodiment, each turned-up portion 6b extends outward in the tire radial direction beyond the maximum tire width position M. The maximum tire width position M is specified at the outer end in the tire axial direction of the carcass ply 6A. Note that the carcass 6 may be constituted by a plurality of carcass plies, for example.

The carcass ply 6A includes a plurality of carcass cords and a topping rubber covering these cords (not illustrated). As the carcass cords, organic fiber cords such as aramid or rayon may be employed, for example. It is desirable that the carcass cords are arranged at an angle of from 70 to 90 degrees with respect to the tire circumferential direction.

As shown in FIG. 1, the belt layer 7 is adjacent to the carcass 6 on the outer side in the tire radial direction in the tread portion 2. The belt layer 7 includes an outer belt ply 7A and an inner belt ply 7B located on the inner side of the outer belt ply 7A in the tire radial direction. The belt layer 7 may be constituted by three or more belt plies, for example. Each of the outer belt ply 7A and the inner belt ply 7B extends outward in the tire axial direction beyond both ground contact ends Te, for example.

As used herein, the ground contact ends Te refer to the outermost ground contact positions in the tire axial direction that contact the flat surface when the tire 1 in the standard state is loaded with 80% of the standard load and brought into contact with the flat surface with a camber angle of zero degrees. The distance in the tire axial direction between the two ground contact ends Te is the ground contact width TW. The center in the tire axial direction of the ground contact width TW is the tire equator Co. The ground contact surface 2s includes the tire equator Co and extends at least to the ground contact ends Te on both sides.

The "standard load" refers to the load specified for each tire in accordance with the standards defined in the applicable standard system for pneumatic tires. For example, in the case of JATMA, it corresponds to the "maximum load capacity"; in the case of TRA, it is the maximum value listed in the table "TIRE LOAD LIMITS AT VARIOUS COLD INFLATION PRESSURES"; and in the case of ETRTO, it is the "LOAD CAPACITY". In addition, for tires for which no standards have been established, the "standard load" refers to the maximum load that can be applied when using the tire in accordance with the above standards.

Each of the outer belt ply 7A and the inner belt ply 7B includes a plurality of belt cords arranged at an angle of from 15 to 45 degrees with respect to the tire circumferential direction, and a topping rubber covering these cords (not illustrated). As the belt cords, steel cords or organic fiber cords such as aramid or rayon may be employed, for example.

Although not particularly limited, the rubber thickness d1 of the cap rubber 2C is greater than the rubber thickness d2 of the base rubber 2B. As a result, the effect of improving ride comfort performance can be more effectively exhibited. If the rubber thickness d1 of the cap rubber 2C is excessively large, there is a risk that the rolling resistance performance may deteriorate. Therefore, it is desirable that the rubber thickness d1 of the cap rubber 2C be at least 150% of the rubber thickness d2 of the base rubber 2B, more desirably at least 200%, and desirably not more than 900%, more desirably not more than 400%. As used herein, the rubber thickness d1 of the cap rubber 2C corresponds to a value obtained by dividing the cross-sectional area of the cap rubber 2C between the ground contact ends Te by the ground contact width TW, in a tire meridional cross-sectional view. The rubber thickness d2 of the base rubber 2B is defined in the same manner as the rubber thickness d1 of the cap rubber 2C. It should be noted that, on the outer side in the tire radial direction of the belt layer 7, only the cap rubber 2C may be provided without the base rubber 2B (not illustrated).

The sidewall rubber 3G has, for example, an inner end 3i in the tire radial direction that is located outward in the tire radial direction relative to the radially outer end Re of the rim flange Rf. The clinch rubber 4G has, for example, an outer end 4e in the tire radial direction that is located outward in the tire radial direction relative to the outer end Re of the rim flange Rf.

The rubber hardness G of the clinch rubber 4G is greater than the rubber hardness I of the sidewall rubber 3G. Such a clinch rubber 4G can effectively suppress deformation of the first bead portion 4A during running. The sidewall rubber 3G also contributes to improving ride comfort performance. Furthermore, the rubber hardness G of the clinch rubber 4G is greater than the rubber hardness B of the cap rubber 2C. Although not particularly limited, the rubber hardness G of the clinch rubber 4G is desirably 60 degrees or more, more desirably 65 degrees or more, desirably 75 degrees or less, and more desirably 70 degrees or less.

As shown in FIG. 2, the rim protector 10 includes, for example, an outer surface 13 extending outward in the tire radial direction from the top portion 11. In the present embodiment, the outer surface 13 is formed as an arc having a center 13c located outward of the tire. It is desirable that the radius of curvature L of the outer surface 13 be equal to or greater than the radius of curvature C of the inner arcuate surface 12, and more desirably greater than the radius of curvature C of the inner arcuate surface 12. Such an outer surface 13 can further suppress deformation of the first bead portion 4A during running. In order to effectively exhibit this effect, the difference (L-C) between the radius of curvature L of the outer surface 13 and the radius of curvature C of the inner arcuate surface 12 is desirably 5 mm or more, and more desirably 10 mm or more.

In the tire 1 in the standard state, the distance D in the tire radial direction from the bead base line BL to the inner end 12i of the inner arcuate surface 12 in the tire radial direction is desirably in the range from 11.5 to 14.5 mm. Since the distance D is 11.5 mm or more and 14.5 mm or less, the contact area F can be sufficiently secured. In order to sufficiently secure the contact area F, the distance D is more desirably 12.0 mm or more, further desirably 12.5 mm or more, more desirably 14.0 mm or less, and further desirably 13.5 mm or less. In the present specification, the inner end 12i of the inner arcuate surface 12 is specified as the position at which the angle $\alpha$ between a tangent t to the outer surface 4s of the first bead portion 4A and a line in the tire radial direction becomes 10 degrees. The angle $\alpha$ is defined such that the direction in which the tangent t inclines inward in the tire axial direction toward the inside in the tire radial direction is positive.

The rim protector 10 of the present embodiment is formed of the clinch rubber 4G. Such a rim protector 10 can further suppress deterioration in rolling resistance performance by effectively suppressing deformation of the first bead portion 4A. Note that the rim protector 10 is not limited to such an embodiment and may be formed, for example, of the sidewall rubber 3G, or may be formed including both the sidewall rubber 3G and the clinch rubber 4G.

In the pneumatic tire 1 in the standard state, it is desirable that 50% or more of the length of the inner arcuate surface 12 of the rim protector 10 be in contact with the rim flange Rf of the standard rim R (as shown in FIG. 1). In the present embodiment, in the pneumatic tire 1 in the standard state, the entire inner arcuate surface 12, including the top portion 11, is in contact with the rim flange Rf.

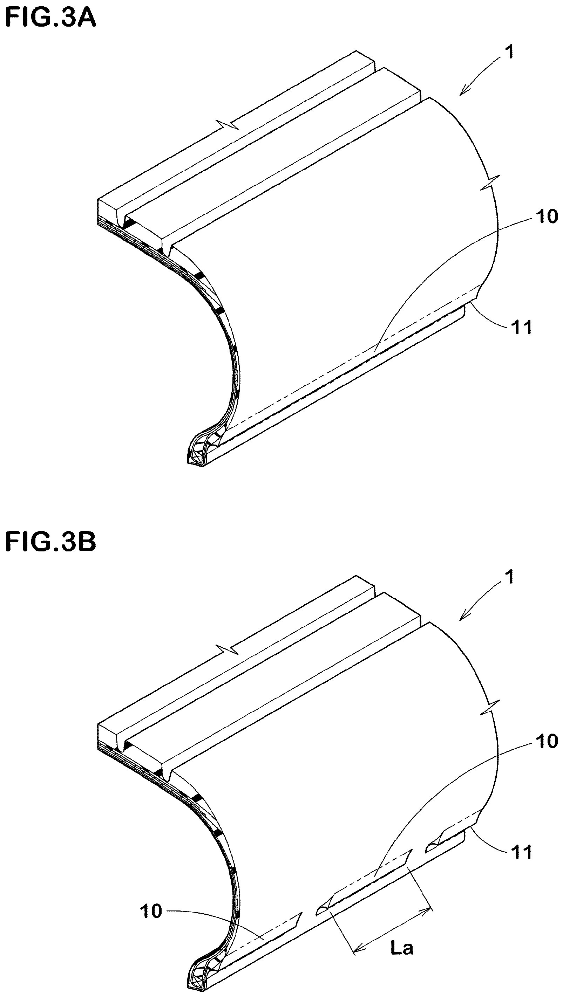

FIG. 3A is a perspective sectional view of the right half of the tire 1. As shown in FIG. 3A, the rim protector 10, in the present embodiment, extends continuously in the tire circumferential direction without interruption. FIG. 3B is a perspective sectional view of the right half of the tire 1 according to another embodiment. As shown in FIG. 3B, plural rim protectors 10 may be provided in an interrupted manner in the tire circumferential direction, for example. In this case, the total of the lengths La of the plural rim protectors 10 in the tire circumferential direction is desirably 50% or more of the tire circumferential length at the position where the top portions 11 are provided, more desirably 70% or more, and even more desirably 90% or more.

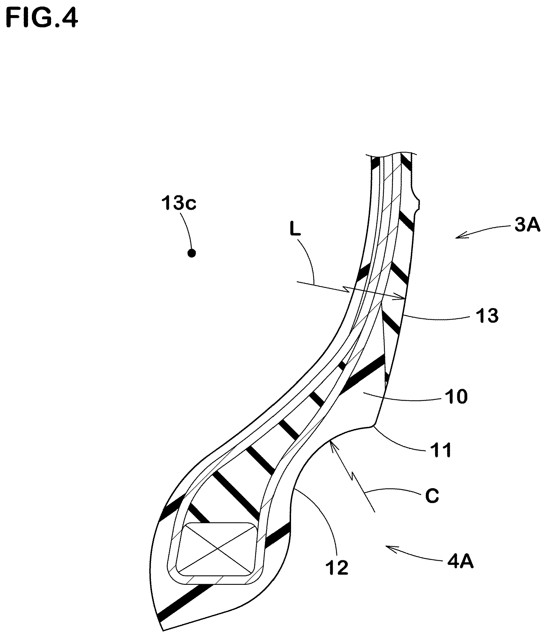

FIG. 4 is a cross-sectional view of the first sidewall portion 3A and the first bead portion 4A according to another embodiment. As shown in FIG. 4, in this embodiment, the outer surface 13 is formed so as to have a center 13c located inward of the tire. Even in such a tire 1, in the meridional cross-section of the tire in the standard state, the rubber hardness B, as well as the separation distance H and the radius of curvature C specified from the top portion 11 and the inner arcuate surface 12 of the rim protector 10, satisfy the above equation (1). It is also desirable that the radius of curvature L of the outer surface 13 be the same as the radius of curvature L of the outer surface 13 shown in FIG. 2. However, the outer surface 13 is not limited to such an embodiment and may be formed, for example, as a straight line.

While the particularly preferred embodiments of the present invention have been described in detail above, the present invention is not limited to the illustrated embodiments and may be modified and implemented in various forms.

[Example]

Some pneumatic tires having the basic structure shown in FIG. 1 were prototyped based on the specifications in Table 1. Then, tests were conducted on the rolling resistance performance and ride comfort performance of the test tires. The test methods and common specifications of the test tires are as follows.

Tire size: 215/55R17
Rim size: 17×7J
Inflation pressure: 200 kPa

[Low Rolling Resistance Performance test]

The low rolling resistance performance was evaluated in accordance with ECE R117-02 (ECE Regulation No. 117 Revision 2). The low rolling resistance performance was assessed by running each test tire on a simulated road surface of an indoor drum tester and measuring the rolling resistance value during the test. The evaluation was expressed as an index, with the inverse of the rolling resistance value of Comparative Example 1 set to 100. A higher numerical value indicates better performance, and a value of 95 or more is considered a pass.

Vertical load: 4.6 kN
Speed: 80 km/h

[Ride Comfort Performance]

The test tires were mounted on all wheels of the following vehicle, and a test driver drove the vehicle on a test course with a dry asphalt surface containing a single bump. The shock experienced when driving over the bump and the level of vibration during driving were evaluated subjectively by the test driver. The results are expressed as a rating with Comparative Example 1 set to 100. A higher numerical value indicates better ride comfort performance.
Vehicle: Japanese-made front-wheel-drive (FF) car with a 2000 cc engine
The test results are shown in Table 1 and Table 2.

[Table 1]

|  | Comparative ex. 1 | Comparative ex.2 | Ex. 1 | Ex. 2 | Ex. 3 | Ex. 4 | Ex. 5 |
|---|---|---|---|---|---|---|---|
| H × B / C | 101 | 8.0 | 12.8 | 61.0 | 93.5 | 61.0 | 61.0 |
| H (mm) | 12.0 | 4.0 | 4.0 | 9.5 | 12.0 | 9.5 | 9.5 |
| B (degree) | 80 | 44 | 48 | 61 | 74 | 61 | 61 |
| C (mm) | 9.5 | 22 | 15 | 9.5 | 9.5 | 9.5 | 9.5 |
| D (mm) | 11.5 | 11.5 | 11.5 | 11.5 | 11.5 | 14.5 | 15 |
| Low rolling resistance performance [Index (Higher value indicates better performance.)] | 100 | 80 | 95 | 110 | 100 | 100 | 98 |
| Ride comfort performance [Index (Higher value indicates better performance.)] | 100 | 130 | 128 | 115 | 110 | 115 | 122 |

[Table 2]

|  | Ex. 6 | Ex. 7 | Ex. 8 | Ex. 9 | Ex. 10 | Ex. 11 | Comparative ex. 3 |
|---|---|---|---|---|---|---|---|
| H × B / C | 38.6 | 34.1 | 25.7 | 77.1 | 12.8 | 93.5 | 96.3 |
| H (mm) | 9.5 | 9.5 | 4.0 | 12.0 | 4.0 | 12.0 | 15.0 |
| B (degree) | 61 | 61 | 61 | 61 | 48 | 74 | 61 |
| C (mm) | 15 | 17 | 9.5 | 9.5 | 15 | 9.5 | 9.5 |
| D (mm) | 11.5 | 11.5 | 11.5 | 11.5 | 11.5 | 11.5 | 11.5 |
| Low rolling resistance performance [Index: Higher value indicates better performance] | 99 | 96 | 100 | 100 | 95 | 100 | 92 |
| Ride comfort performance [Index: Higher value indicates better performance] | 123 | 126 | 122 | 112 | 130 | 108 | 103 |

From the test results, it can be understood that, compared to the tire of Comparative Example 1, the tires of the Examples show a significant improvement in ride comfort performance in all cases, although there are some cases where rolling resistance performance slightly decreases. In addition, compared to the tire of Comparative Example 2, the tires of the Examples show a significant improvement in rolling resistance performance. Therefore, it can be understood that the tires of the Examples can, as a whole, achieve a suppressed reduction in rolling resistance performance and a significant improvement in ride comfort performance.

[Note]

The present invention includes the following aspects.

[Present Invention 1]

A pneumatic tire comprising:

a tread portion,
a first bead portion in which a bead core is embedded, and
a cap rubber that forms a ground contact surface of the tread portion and has a rubber hardness B (degrees), wherein
in a tire meridional cross section in a standard state in which the pneumatic tire is mounted on a standard rim, adjusted to a standard internal pressure, and under no load, a rim protector that has a top portion protruding outward of the tire and extends in a tire circumferential direction is formed on an outer surface of the first bead portion,
the rim protector includes an inner arcuate surface extending inward in a tire radial direction from the top portion and having a radius of curvature C (mm) with a center located outward of the tire, and
when a separation distance in a tire axial direction between the top portion and a tire radial line that defines the rim width of the standard rim is defined as H (mm), the following expression (1) is satisfied:

$$12.8 \leq H \times B / C \leq 93.5 \ldots (1).$$

[Present Invention 2]

The pneumatic tire according to Present Invention 1, wherein
further, the following expression (2) is satisfied:

$$25.0 \leq H \times B / C \leq 93.5 \ldots (2)$$

[Present Invention 3]

The pneumatic tire according to Present Invention 2, wherein
further, the following expression (3) is satisfied:

$$25.0 \leq H \times B / C \leq 61.0 \ldots (3)$$

[Present Invention 4]

The pneumatic tire according to any one of Present Inventions 1 to 3, wherein
the radius of curvature C is in a range from 9.5 to 15.0 mm.

[Present Invention 5]

The pneumatic tire according to any one of Present Inventions 1 to 4, wherein the rubber hardness B is in a range from 48 to 74 degrees.

[Present Invention 6]

The pneumatic tire according to any one of Present Inventions 1 to 5, wherein
the separation distance H is in a range from 4.0 to 12.0 mm.

[Present Invention 7]

The pneumatic tire according to any one of Present Inventions 1 to 6, wherein
in the pneumatic tire in the standard state, a distance D in the tire radial direction from a bead baseline to a radially inner end of the inner arcuate surface is in a range from 11.5 to 14.5 mm.

[Present Invention 8]

The pneumatic tire according to any one of Present Inventions 1 to 7, wherein

in the pneumatic tire in the standard state, 50% or more of the length of the inner arcuate surface of the rim protector is in contact with a rim flange of the standard rim.

[Present Invention 9]

The pneumatic tire according to any one of Present Inventions 1 to 7, wherein
in the pneumatic tire in the standard state, the entire inner arcuate surface of the rim protector is in contact with a rim flange of the standard rim.

[Present Invention 10]

The pneumatic tire according to any one of Present Inventions 1 to 9, wherein

the rim protector includes an outer surface extending outward in the tire radial direction from the top portion,
the outer surface is formed as an arc having a center located outward of the tire, and
a radius of curvature L of the outer surface is equal to or greater than the radius of curvature C of the inner arcuate surface.

[Present Invention 11]

The pneumatic tire according to Present Invention 10, wherein
the difference (L-C) between the radius of curvature L of the outer surface and the radius of curvature C of the inner arcuate surface is 5 mm or more.

[Present Invention 12]

The pneumatic tire according to any one of Present Inventions 1 to 11, wherein
the rim protector is formed of a clinch rubber having a rubber hardness G equal to or greater than 60 degrees.

[Present Invention 13]

The pneumatic tire according to any one of Present Inventions 1 to 12, wherein
the rim protector extends continuously in the tire circumferential direction.

[Present Invention 14]

The pneumatic tire according to any one of Present Inventions 1 to 12, wherein
plural rim protectors are provided in an interrupted manner in the tire circumferential direction.

[Present Invention 15]

The pneumatic tire according to Present Invention 14, wherein
the total of lengths La of the plural rim protectors in the tire circumferential direction is 50% or more of the tire circumferential length at the position where the top portions are provided.

[Description of Reference Signs]

1       Pneumatic tire
2C      Cap rubber
4A      First bead portion
4s      Outer surface
10      Rim protector
11      Top portion
12      Inner arcuate surface
12c     Center
R       Standard rim

RL      Radial line of the tire

**Claims**

1.  A pneumatic tire comprising:

    a tread portion,
    a first bead portion in which a bead core is embedded, and
    a cap rubber that forms a ground contact surface of the tread portion and has a rubber hardness B (degrees), wherein
    in a tire meridional cross section in a standard state in which the pneumatic tire is mounted on a standard rim, adjusted to a standard internal pressure, and under no load, a rim protector that has a top portion protruding outward of the tire and extends in a tire circumferential direction is formed on an outer surface of the first bead portion,
    the rim protector includes an inner arcuate surface extending inward in a tire radial direction from the top portion and having a radius of curvature C (mm) with a center located outward of the tire, and
    when a separation distance in a tire axial direction between the top portion and a tire radial line that defines the rim width of the standard rim is defined as H (mm), the following expression (1) is satisfied:

$$12.8 \leq H \times B / C \leq 93.5 \ldots (1).$$

2.  The pneumatic tire according to claim 1, wherein
    further, the following expression (2) is satisfied:

$$25.0 \leq H \times B / C \leq 93.5 \ldots (2)$$

3.  The pneumatic tire according to claim 2, wherein
    further, the following expression (3) is satisfied:

$$25.0 \leq H \times B / C \leq 61.0 \ldots (3)$$

4.  The pneumatic tire according to any one of claims 1 to 3, wherein
    the radius of curvature C is in a range from 9.5 to 15.0 mm.

5.  The pneumatic tire according to any one of claims 1 to 4, wherein
    the rubber hardness B is in a range from 48 to 74 degrees.

6.  The pneumatic tire according to any one of claims 1 to 5, wherein
    the separation distance H is in a range from 4.0 to 12.0 mm, preferably in a range from 9.0 to 10.5mm.

7.  The pneumatic tire according to any one of claims 1 to 6, wherein
    in the pneumatic tire in the standard state, a distance D in the tire radial direction from a bead baseline to a radially inner end of the inner arcuate surface is in a range from 11.5 to 14.5 mm.

8.  The pneumatic tire according to any one of claims 1 to 7, wherein
    in the pneumatic tire in the standard state, 50% or more of the length of the inner arcuate surface of the rim protector is in contact with a rim flange of the standard rim.

9.  The pneumatic tire according to any one of claims 1 to 7, wherein
    in the pneumatic tire in the standard state, the entire inner arcuate surface of the rim protector is in contact with a rim flange of the standard rim.

10. The pneumatic tire according to any one of claims 1 to 9, wherein

    the rim protector includes an outer surface extending outward in the tire radial direction from the top portion,
    the outer surface is formed as an arc having a center located outward of the tire, and

a radius of curvature L of the outer surface is equal to or greater than the radius of curvature C of the inner arcuate surface.

11. The pneumatic tire according to claim 10, wherein the difference (L-C) between the radius of curvature L of the outer surface and the radius of curvature C of the inner arcuate surface is 5 mm or more.

12. The pneumatic tire according to any one of claims 1 to 11, wherein the rim protector is formed of a clinch rubber having a rubber hardness G equal to or greater than 60 degrees.

13. The pneumatic tire according to any one of claims 1 to 12, wherein the rim protector extends continuously in the tire circumferential direction.

14. The pneumatic tire according to any one of claims 1 to 12, wherein plural rim protectors are provided in an interrupted manner in the tire circumferential direction.

15. The pneumatic tire according to claim 14, wherein the total of lengths La of the plural rim protectors in the tire circumferential direction is 50% or more of the tire circumferential length at the position where the top portions are provided.

FIG.1

EP 4 678 421 A1

# FIG.2

**FIG.3A**

**FIG.3B**

FIG.4

# EUROPEAN SEARCH REPORT

**Application Number**

EP 25 18 2762

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | JP 2017 136966 A (SUMITOMO RUBBER IND) 10 August 2017 (2017-08-10) | 1-4,6,8, 12,13 | INV. B60C15/024 |
| Y | * paragraphs [0037], [0044], [0045], [0062]; claims; figures * | 5,9-11, 14,15 | B60C11/00 |
| A | | 7 | |
| X | CN 107 053 961 A (SUMITOMO RUBBER IND) 18 August 2017 (2017-08-18) | 1-4,6,8, 12,13 | |
| Y | * the whole document * | 5,9-11, 14,15 | |
| A | | 7 | |
| Y | US 2021/331522 A1 (NUKUSHINA RYOSUKE [JP]) 28 October 2021 (2021-10-28) * paragraph [0057]; claims; figures * | 5 | |
| Y | US 2020/001651 A1 (NAKAGAWA RYUTARO [JP] ET AL) 2 January 2020 (2020-01-02) * claim 1 * | 5 | |
| Y | US 2022/371372 A1 (OSHIMO MASAKI [JP] ET AL) 24 November 2022 (2022-11-24) * paragraph [0024] * | 5 | TECHNICAL FIELDS SEARCHED (IPC) B60C |
| Y | US 8 505 602 B2 (MOROZUMI JUNICHIRO [JP]; SUMITOMO RUBBER IND [JP]) 13 August 2013 (2013-08-13) * claims; figure 2 * | 10,11, 14,15 | |
| Y | US 2002/066513 A1 (ROESGEN ALAIN EMILE FRANCOIS [LU] ET AL) 6 June 2002 (2002-06-06) * claims; figures * | 9 | |

The present search report has been drawn up for all claims

| Place of search | Date of completion of the search | Examiner |
|---|---|---|
| Munich | 25 November 2025 | Thanbichler, Peter |

EPO FORM 1503 03.82 (P04C01)

## ANNEX TO THE EUROPEAN SEARCH REPORT
## ON EUROPEAN PATENT APPLICATION NO.

EP 25 18 2762

25-11-2025

| Patent document cited in search report | | Publication date | Patent family member(s) | | Publication date |
|---|---|---|---|---|---|
| JP 2017136966 | A | 10-08-2017 | JP | 6805499 B2 | 23-12-2020 |
| | | | JP | 2017136966 A | 10-08-2017 |
| CN 107053961 | A | 18-08-2017 | CN | 107053961 A | 18-08-2017 |
| | | | EP | 3210800 A2 | 30-08-2017 |
| | | | US | 2017225522 A1 | 10-08-2017 |
| US 2021331522 | A1 | 28-10-2021 | CN | 112585017 A | 30-03-2021 |
| | | | EP | 3845397 A1 | 07-07-2021 |
| | | | FI | 3845397 T3 | 05-11-2025 |
| | | | JP | 7119787 B2 | 17-08-2022 |
| | | | JP | 2020032939 A | 05-03-2020 |
| | | | RU | 2758158 C1 | 26-10-2021 |
| | | | US | 2021331522 A1 | 28-10-2021 |
| | | | WO | 2020044987 A1 | 05-03-2020 |
| US 2020001651 | A1 | 02-01-2020 | CN | 110268014 A | 20-09-2019 |
| | | | JP | WO2018143272 A1 | 07-02-2019 |
| | | | US | 2020001651 A1 | 02-01-2020 |
| | | | WO | 2018143272 A1 | 09-08-2018 |
| US 2022371372 | A1 | 24-11-2022 | CN | 113811452 A | 17-12-2021 |
| | | | EP | 3967514 A1 | 16-03-2022 |
| | | | JP | 6753487 B1 | 09-09-2020 |
| | | | JP | 2020192882 A | 03-12-2020 |
| | | | US | 2022371372 A1 | 24-11-2022 |
| | | | WO | 2020241191 A1 | 03-12-2020 |
| US 8505602 | B2 | 13-08-2013 | CN | 101954841 A | 26-01-2011 |
| | | | EP | 2275285 A1 | 19-01-2011 |
| | | | JP | 4938830 B2 | 23-05-2012 |
| | | | JP | 2011020621 A | 03-02-2011 |
| | | | US | 2011011508 A1 | 20-01-2011 |
| US 2002066513 | A1 | 06-06-2002 | FR | 2817508 A1 | 07-06-2002 |
| | | | US | 2002066513 A1 | 06-06-2002 |

EPO FORM P0459

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2005186672 A